# FASCICULE DE BREVET EUROPEEN

(11) **EP 4 298 411 B1**
(45) Date de publication et mention de la délivrance du brevet: **21.01.2026**
(21) Numéro de dépôt: 22710684.6
(22) Date de dépôt: 23.02.2022
(51) Int. Cl.: G01G 7/02, G01G 13/22

(54) **SYSTEME DE PESEE POUR UN APPAREIL APTE A DELIVRER UNE MASSE PREDETERMINEE ET PROCEDE CORRESPONDANT**
WÄGESYSTEM FÜR EINE VORRICHTUNG ZUR ABGABE EINER VORBESTIMMTEN MASSE UND ENTSPRECHENDES VERFAHREN
WEIGHING SYSTEM FOR AN APPARATUS ABLE TO DELIVER A PREDETERMINED MASS, AND CORRESPONDING METHOD

(30) Priorité: 25.02.2021 FR 2101830
(43) Date de publication de la demande: 03.01.2024
(73) Titulaire: BEABA, 01100 Bellignat (FR)
(72) Inventeur: PAPY, Hervé, 01100 OYONNAX (FR); BENOIT, Sylvain, 01370 MEILLONNAS (FR); HERVE, Adrien, 69500 BRON (FR)
(74) Mandataire: Gevers & Orès
(86) Numéro de dépôt international: PCT/FR2022/050325
(87) Numéro de publication internationale: WO 2022/180338

(56) Documents cités:
- EP-A2- 1 145 627
- DE-A1- 1 549 301
- DE-U1- 29 620 108

## Description

### Domaine de l'invention

La présente invention concerne un système de pesée d'une masse prédéterminée d'un produit alimentaire pour un appareil apte à délivrer cette masse prédéterminée en produit alimentaire. L'appareil est particulièrement destiné pour la préparation d'une boisson telle qu'un biberon à base de poudre de lait.

### Arrière-plan technique

Il existe divers systèmes de pesée de produit alimentaire pour la préparation de boisson. De nombreux systèmes de pesée comprennent un conduit dans lequel s'étend une vis sans fin qui est entrainée en rotation par des moyens d'entrainement. Les vis sans fin sont particulièrement adaptées au dosage de poudre alimentaire tel que la poudre de lait pour la préparation de biberon. Le système de pesée comprend également une trémie dans laquelle une quantité de poudre de lait est fournie et est destinée à alimenter la vis sans fin via une ouverture ménagée dans la paroi du conduit. La rotation et/ou le nombre de tour de la vis sans fin dans la conduite permet de délivrer une quantité prédéterminée de poudre de lait vers une sortie de produit alimentaire.

Cependant, la quantité de produit délivrée par la vis sans fin n'est pas précise. En effet, la livraison de poudre de lait est effectuée sur la base d'une densité moyenne de celle-ci sans prendre en compte la granulométrie, ni la rhéologie granulaire des poudres. Les poudres de lait ont des granulométries et/ou des densités différentes selon les besoins nutritionnels de l'enfant. Par ailleurs, il y a de grandes variations de la masse de poudre de lait effectivement délivrée du fait des variations de densité à l'état sec ainsi que de la masse d'eau absorbée par la poudre selon ses conditions de stockage en amont de la trémie (dans l'appareil et à l'extérieur de celui-ci). La présence d'humidité dans la poudre de lait modifie considérablement son écoulement. De plus, lorsque la vis sans fin s'arrête, une quantité de poudre s'échappe de la section terminale de la vis sans fin et est délivrée après que le moteur de la vis sans fin se soit arrêté. Tous ces éléments faussent la mesure de la masse de poudre de lait qui est délivrée.

Il est connu également un système de pesée de poudre de lait comprenant une chambre de mesure et un plateau libre en rotation autour d'un axe de rotation qui est installé dans la chambre de mesure. Une trémie est destinée à alimenter la chambre de mesure avec de la poudre de lait. Le plateau est relié, à une extrémité, à des moyens de pesée de la poudre qui sont sensibles à la pression et qui sont reliés à une unité électronique de commande. L'autre extrémité du plateau est reliée à des moyens de butée. Lorsque la masse de poudre tombant par gravité atteint une valeur désirée par les moyens sensibles à la pression, l'unité électronique de commande ordonne la rotation d'un moteur pas à pas qui porte une came destinée à venir en butée contre les moyens de butée. Les moyens de butée actionnés par la came entraînent alors la rotation du plateau. La quantité de poudre est déchargée par un orifice de décharge de la chambre de mesure. Cependant, la quantité de poudre de lait désirée n'est pas précise car la mesure ne prend pas en compte les différentes granulométries, densités et/ou la rhéologie granulaire de la poudre de lait comme énoncé ci-avant. De plus, ce système est complexe et couteux car celui-ci fait intervenir plusieurs organes pour mesurer une masse précise et pour délivrer cette masse précise.

D'autres exemples de systèmes de pesée sont décrits dans les documents DE-A1-1549301 et DE-U1-29620108. Dans le document DE-A1-1549301, le système de pesée comprend divers éléments pour opérer diverses actions, comme entre autres, une tige disposée à une distance d'un aimant pour déterminer une masse d'un aliment à peser, d'un organe de réception de l'aliment à peser qui est relié à un contrepoids et de microrelais pour maintenir l'organe de réception pendant un temps déterminé lors du versement. Le contrepoids permet de ramener l'organe de réception en position. La distance entre la tige et l'aimant pour déterminer la masse à atteindre est une grandeur dimensionnelle. Un tel système manque de fiabilité et est coûteux.

Le but de la présente invention est de fournir un système de pesée qui soit précis, fiable, et économique.

### Résumé de l'invention

On parvient à cet objectif conformément à l'invention grâce à un système de pesée destiné à peser et à déverser une masse prédéterminée d'un produit alimentaire, le dispositif comprenant :
- un châssis,
- un moteur électrique pas à pas porté par le châssis et ayant un arbre de sortie apte à adopter différentes positions suivant un axe de déplacement,
- un organe de réception du produit alimentaire qui est mobile suivant l'axe de déplacement entre une position de réception du produit alimentaire et une position de déversement du produit alimentaire, l'organe de réception étant configuré pour contenir ou retenir une masse déterminée du produit alimentaire dans la position de réception et pour laisser tomber cette masse dans la position de déversement,
- une unité électronique de commande destinée à piloter le moteur électrique,
l'organe de réception étant solidaire en déplacement de l'arbre de sortie et en ce que le système de pesée est configuré de manière à ce que, dans ladite position de réception, l'organe de réception et le produit alimentaire qu'il contient ou retient, appliquent un couple statique sur l'arbre de sortie, et l'unité électronique de commande étant configurée de manière à appliquer un couple résistant, pour une masse prédéterminée du produit alimentaire, sur l'arbre de sortie de sorte que, lorsque le couple statique est au moins égal au couple résistant, l'arbre de sortie change de position.

Ainsi, cette solution permet d'atteindre l'objectif susmentionné. En particulier, la valeur de la masse désirée lorsqu'elle est atteinte induit un couple statique de charge qui entraîne le décrochage du moteur. Par « décrochage » nous entendons un phénomène de désynchronisation du rotor d'un moteur qui peut intervenir en cas d'un choc ou lorsqu'un couple appliqué sur l'axe du moteur est égal ou supérieur au couple de maintien en position du moteur. Le moteur n'est plus capable de maintenir la position et opère un glissement ou décrochage qui entraîne un changement de pas involontaire de celui-ci. L'invention utilise ce phénomène pour détecter avec précision la masse précise du produit alimentaire déchargé dans l'organe de réception. La mise en œuvre et l'installation d'un tel système est simple et économique car des phénomènes physiques intervenant classiquement dans les moteurs sont utilisés. La mesure du couple du moteur suit une loi linéaire ce qui fait de cette solution un système adaptatif. S'agissant de simplicité, le moteur pas-à-pas permet d'opérer plusieurs actions/fonctions qui sont de fixer la masse à atteindre, de maintenir l'organe de réception jusqu'à ce que la masse déterminée soit atteinte, de basculer l'organe de réception et de le ramener en position. Le moteur pas-à-pas occupe peu de place ce qui rend le système très compact. De plus, le moteur pas-à-pas permet de régler une grandeur électromagnétique qui est beaucoup plus fiable qu'une grandeur dimensionnelle.

Le système comprend les caractéristiques suivantes prises seules ou en combinaison :
- l'unité électronique de commande est configurée pour piloter le déplacement de l'arbre de sortie et le déplacement de l'organe de réception entre la position de réception et la position de déversement lorsque la masse de produit alimentaire atteint une valeur prédéterminée.
- la masse prédéterminée du produit alimentaire contenu dans l'organe de réception et l'organe de réception présentent un centre de gravité qui est situé à une distance prédéterminée de l'axe de déplacement A.
- l'organe de réception comprend des moyens de liaison solidarisés à un arbre d'entraînement, ledit arbre d'entraînement étant couplé en rotation à l'arbre de sortie du moteur électrique mobile en rotation.
- l'organe de réception présente la forme d'un godet.
- l'organe de réception présente la forme d'une paroi de réception.
- la paroi de réception présente une surface de réception plane ou courbée.
- le châssis comprend une plateforme pourvue de l'ouverture traversant la paroi de la plateforme de part et d'autre et par laquelle le produit alimentaire est destiné à tomber par gravité.
- le système de pesée comprend des moyens de détection aptes à détecter au moins une position de l'arbre de sortie du moteur pas à pas, les moyens de détection étant reliés à l'unité électronique de commande.
- la masse prédéterminée est comprise entre 3g et 100g.
- l'organe de réception est monté sur l'arbre de sortie de manière que le centre de gravité de l'ensemble, formé de l'organe de réception et de la masse de produit alimentaire, est défini dans un plan passant par l'axe de déplacement A qui forme un angle d'avance prédéterminé avec un plan horizontal passant par l'axe de déplacement A de l'arbre de sortie.
- l'angle de déversement de l'organe de réception entre la position de réception et la position de déversement est compris entre 0° et 180°.
- le système de pesée comprend un dispositif vibrant destiné à permettre le déversement total du produit alimentaire de l'organe de réception dans la position de déversement.

L'invention concerne également un appareil pour la préparation d'une boisson à base d'un produit alimentaire, l'appareil comprenant un système de pesée selon l'une quelconque des caractéristiques précédentes.

Suivant une caractéristique de l'appareil, celui-ci comprend un réservoir de stockage de produit alimentaire et une chambre de mélange destinée à recevoir une masse prédéterminée de produit alimentaire de l'organe de réception dans la position de déversement.

L'invention concerne en outre un procédé pour peser et déverser une masse prédéterminée d'un produit alimentaire au moyen d'un système de pesée, le système de pesée comprenant au moins un moteur électrique pas à pas ayant un arbre de sortie et un organe de réception qui est solidaire en déplacement de l'arbre de sortie, le procédé comprenant les étapes suivantes:
- une étape de fourniture d'un produit alimentaire,
- une étape de déchargement d'une quantité de produit alimentaire sur ou dans l'organe de réception,
- une étape de pesée du produit alimentaire consistant à :
- appliquer un couple résistant pour une masse prédéterminée du produit alimentaire, sur l'arbre de sortie par l'unité électronique de commande,
- appliquer un couple statique sur l'arbre de sortie par l'organe de réception et le produit alimentaire qu'il contient ou retient, et
- changer la position de l'arbre sortie du moteur électrique lorsque le couple statique est au moins égal au couple résistant.

Le procédé comprend des étapes suivantes et/ou caractéristiques prises seules ou en combinaison :
- le produit alimentaire comprend de la poudre de lait.
- une étape de déversement de la masse de produit alimentaire mesurée.
- l'unité électronique de commande pilote le moteur électrique.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue de face d'un appareil destiné à délivrer une masse précise d'un produit alimentaire et à préparer une boisson avec cette masse précise selon l'invention ;
[Fig. 2] La figure 2 est une vue en perspective d'un système de pesée d'une masse précise et déterminée d'un produit alimentaire selon l'invention ;
[Fig. 3] La figure 3 illustre en perspective, sensiblement en-dessous, un exemple d'organe de réception du produit alimentaire selon l'invention ;
[Fig. 4] La figure 4 illustre en perspective, sensiblement au-dessus, un exemple d'organe de réception du produit alimentaire selon l'invention ;
[Fig. 5] La figure 5 représente, suivant une vue en perspective, un exemple de moteur installé sur un châssis d'un système de pesée et des moyens de détection d'au moins une position de l'arbre de sortie du moteur selon l'invention ;
[Fig. 6] La figure 6 est une vue en coupe transversale et en perspective d'un exemple de système de pesée selon l'invention ;
[Fig. 7] La figure 7 représente une vue en coupe axiale du système de pesée avec un organe de réception dans une position de réception selon l'invention ;
[Fig. 8] La figure 8 est une vue en coupe axiale du système de pesée avec un organe de réception dans la position de déversement selon l'invention ;
[Fig. 9] La figure 9 illustre de manière schématique et suivant une coupe axiale un autre mode de réalisation d'un organe de réception d'un système de pesée présentant la forme d'une paroi de réception pour fermer un réceptacle selon l'invention ;
[Fig. 10] La figure 10 illustre de manière schématique et suivant une coupe axiale, un autre mode de réalisation d'un organe de réception d'un système de pesée présentant la forme d'une paroi de réception pour fermer un réceptacle selon l'invention ;
[Fig. 11] La figure 11 est vue en coupe partielle et transversale des moyens de détection de positions de l'arbre de sortie du moteur électrique du système de pesée selon l'invention ; et
[Fig. 12] La figure 12 représente les différentes étapes d'un procédé de pesée et de déversement d'une masse prédéterminée de produit alimentaire selon l'invention.

### Description détaillée de l'invention

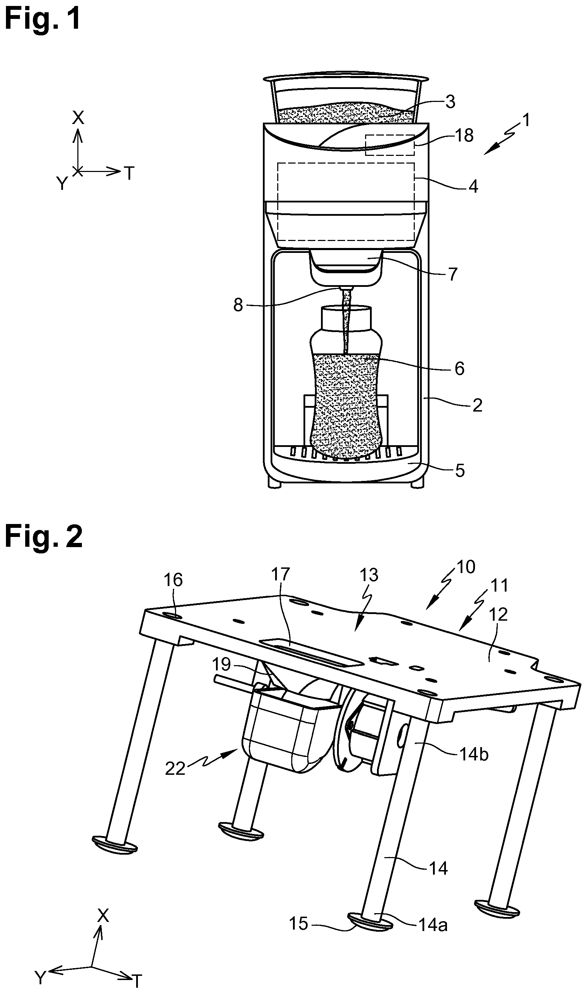

Sur la figure 1 est illustré un appareil 1 pour la préparation de boisson à base de produit alimentaire tel que de la poudre, du liquide, etc. Le produit alimentaire est de préférence, mais non limitativement de la poudre de lait infantile. L'appareil est particulièrement destiné à délivrer une masse précise du produit alimentaire pour préparer la boisson.

L'appareil 1 comprend un bâti 2, un réservoir de stockage 3 de produit alimentaire et un réservoir d'eau (non représenté). Le bâti 2 a une base 5 qui est configurée pour recevoir un récipient 6 dans lequel la boisson est déversée. Le récipient 6 peut être un biberon. Le réservoir de stockage 3 de produit alimentaire est agencé au-dessus de la base 5 suivant un axe longitudinal X (ici vertical en référence au plan de la figure 1 et suivant une situation d'utilisation de l'appareil disposé sur une surface de travail). Le réservoir d'eau est agencé dans le présent exemple en aval de la base 5 suivant un premier axe transversal Y (ici horizontal et perpendiculaire au plan de la figure 1). Le premier axe transversal Y est perpendiculaire à l'axe longitudinal X. Afin de pouvoir peser et déverser une masse prédéterminée de produit alimentaire de manière précise pour la préparation de la boisson, l'appareil comprend un système de pesée 10 qui est décrit ultérieurement dans la présente description

La masse prédéterminée et précise de produit alimentaire est livrée dans une chambre de mélange 7 dans laquelle de l'eau à une température déterminée est injectée pour favoriser le mélange du produit alimentaire (ici de la poudre de lait et de l'eau. L'eau peut être injectée sous pression. La chambre de mélange 7 est agencée entre la base 5 et le système de pesée 10 suivant l'axe longitudinal X. La chambre de mélange 7 comprend une buse 8 destinée à délivrer la boisson et qui est disposée à distance de la base 5. La buse 8 est opposée à la base 5 suivant l'axe longitudinal X. La buse 8 s'étend suivant l'axe longitudinal depuis un fond de la chambre et en direction de la base. A cet effet, l'appareil 1 comprend un circuit hydraulique (non représenté) qui comprend une conduite comportant un orifice d'entrée relié au réservoir d'eau et un orifice de sortie relié à la chambre de mélange 7. Le circuit hydraulique comprend une pompe permettant l'extraction de l'eau du réservoir d'eau et sa circulation dans la conduite ainsi que des moyens de chauffage de l'eau. Ces moyens de chauffage sont disposés sur la conduite et sont agencés entre la pompe et la chambre de mélange 7.

Le système de pesée 10 est représenté sur la figure 2. Le système de pesée 10 est décrit dans une situation d'installation dans l'appareil avec un repère orthogonal X, Y, T. Le système de pesée 10 comprend un châssis 11 qui est disposé dans une enceinte 4 (représentée en pointillé) du bâti 2, l'enceinte étant située au-dessus de la chambre de mélange 7 suivant l'axe longitudinal X. Le châssis 11 comprend une plateforme 12 avec une première surface 13 définie dans un plan qui est orthogonal à l'axe longitudinal X. Le châssis 11 comprend des pieds 14 qui permettent de stabiliser la plateforme 12 et de maintenir la plateforme 12 à distance d'un fond de l'enceinte 4. Les pieds 14 sont dans le présent exemple au nombre de quatre. Chaque pied 14 est allongé suivant l'axe longitudinal entre une première extrémité 14a et une deuxième extrémité 14b. La première extrémité 14a porte une semelle 15 destinée à prendre appui sur le fond de l'enceinte 4 et la deuxième extrémité 14b est fixée sur la plateforme 12 au moyen d'organes de fixation. Pour cela, la plateforme 12 comprend des orifices 16 qui reçoivent chacun respectivement la deuxième extrémité 14b d'un pied 14. Les organes de fixation comprennent des écrous qui sont montés chacun en force dans un orifice 16 et dont le filetage interne coopère avec un filetage externe prévu à la deuxième extrémité 14b de chaque pied. Bien entendu, les organes de fixation peuvent comprendre d'autres organes de fixation tels que des goujons, des vis, de la colle, de la soudure, etc.

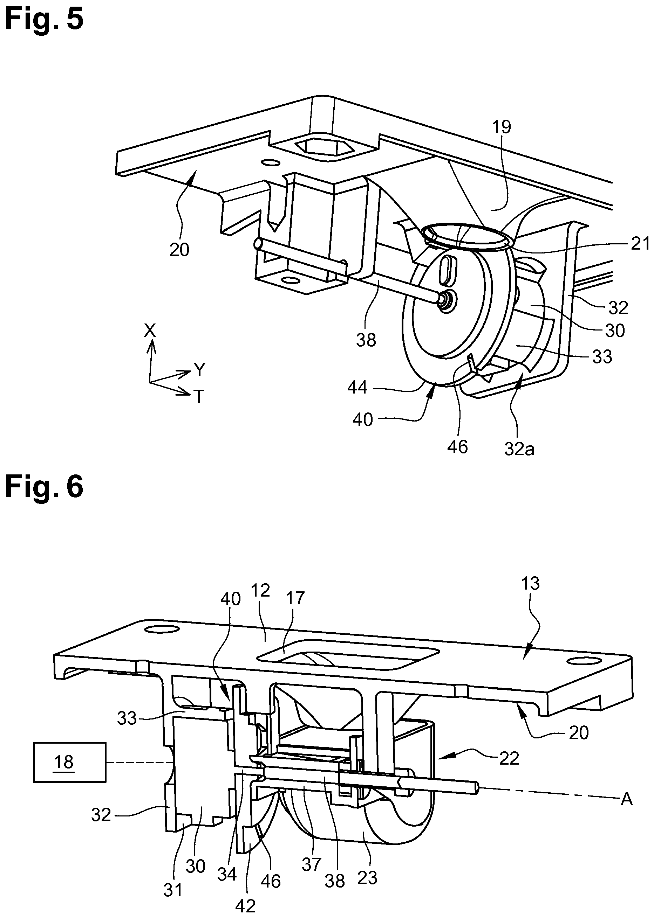

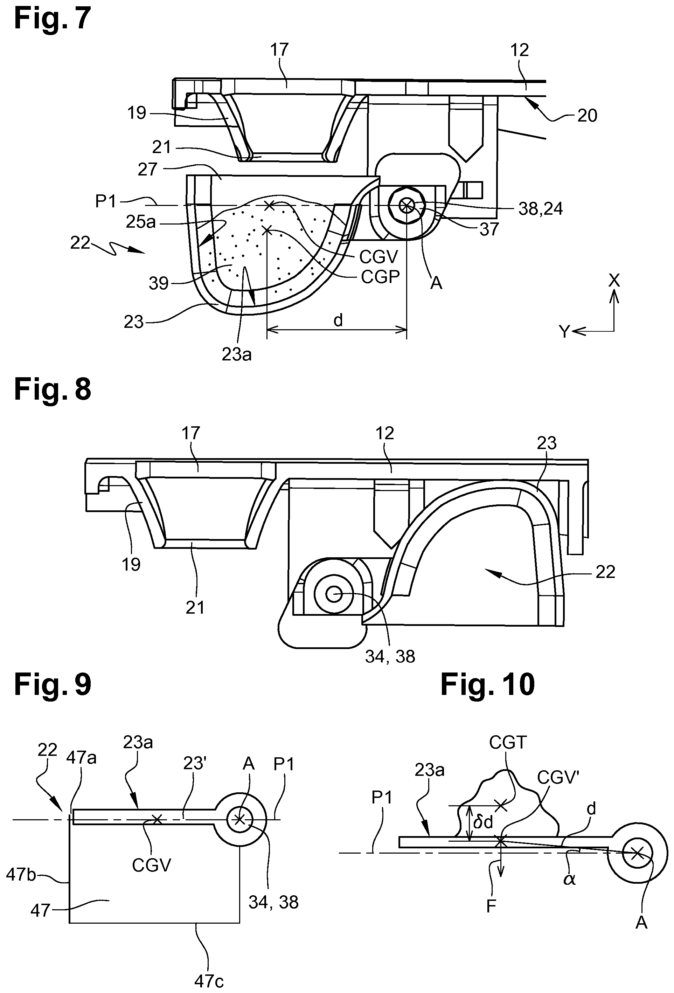

Le réservoir de stockage 3 de produit alimentaire est avantageusement monté sur la plateforme 12. Le réservoir de stockage 3 détermine un volume de stockage pour stocker le produit alimentaire. La plateforme 12 comprend une ouverture 17 qui traverse la paroi de celle-ci de part et d'autre suivant l'axe longitudinal X. Le réservoir de stockage 3 comprend un orifice de déchargement (non représenté) qui débouche d'une part, dans le volume de stockage du réservoir de stockage et d'autre part, dans l'ouverture 17 de la plateforme 12. Avantageusement, des moyens d'obturation (non représentés) de l'orifice de déchargement sont prévus pour occuper une position d'ouverture et une position de fermeture de l'orifice de déchargement. Ces moyens d'obturation sont pilotés par une unité électronique de commande 18 (cf. figures 1, 6 et 11). L'unité électronique est montée dans l'appareil 1 et en particulier sur le bâti 2. Les moyens d'obturation peuvent comprendre des portes qui pivotent autour d'un axe parallèle au plan de la première surface 13 de la plateforme 12 ou au moins une porte coulissant dans le plan de la première surface 13. Nous pouvons voir également qu'une trémie 19 s'étend, suivant l'axe longitudinal X, depuis une deuxième surface 20 (cf. figure 5) de la plateforme 12. L'ouverture 17 débouche dans la trémie 19 qui la prolonge. Dans le présent exemple, la trémie 19 présente une section transversale tronconique (dans le plan formé des axes longitudinal et premier axe transversal Y) qui rétrécit en direction d'un orifice de sortie 21 (cf. figures 5 et 8) de la trémie 19. L'orifice de sortie 21 de la trémie 19 est opposé (suivant l'axe longitudinal X) à l'ouverture 17 définie dans la plateforme 12.

En référence aux figures 2, 3 et 4, le système de pesée 10 comprend un organe de réception 22 du produit alimentaire alimenté par le réservoir de stockage 3. Cet organe de réception 22 est mobile suivant un axe de déplacement entre une position de réception du produit alimentaire et une position de déversement du produit alimentaire. Ici, l'organe de réception 22 se déplace suivant une rotation autour de l'axe de déplacement. L'organe de réception 22, présente avantageusement, mais non limitativement la forme d'un godet. Cette forme de godet permet de mieux contrôler la réception du produit alimentaire et le contenu. En particulier, l'organe de réception 22 comprend une paroi de réception 23, deux cloisons latérales 24 qui s'étendent depuis les bords latéraux de la paroi de réception 23 et une cloison amont 25 s'élevant depuis un bord amont de la paroi de réception 23. La paroi de réception 23 est ici le fond de l'organe de réception et est courbée. Les cloisons latérales 24 sont opposées suivant un deuxième axe transversal T et comprennent des surfaces internes 24a définies dans des plans sensiblement parallèles. Les termes « amont » et « aval » sont définis par rapport au premier axe transversal Y. Les surfaces internes 24a sont en regard l'une de l'autre. La cloison amont 25 est également reliée aux bords amont des cloisons latérales 24. La cloison amont 25 comprend une surface interne 25a définie dans un plan qui est perpendiculaire au plan des surfaces internes 24a de cloisons latérales 24. La cloison amont 25, les deux cloisons latérales 24 et la paroi de réception 23 de forme un volume de réception d'une quantité de produit alimentaire. Au moins la cloison amont 25 et les cloisons latérales 24 comprennent chacun un bord libre 26 délimitant une ouverture 27 débouchant dans le volume de réception de l'organe de réception 22. La paroi de réception 23 comprend une surface interne 23a courbée et concave qui est orientée vers l'ouverture 27 du godet. La surface interne 23 fait office de surface de réception du produit alimentaire.

Sur les figures 2, 5 et 6, le système de pesée 10 comprend un moteur électrique 30 destiné à entraîner le déplacement de l'organe de réception 22 entre la position de réception et la position de déversement. Le moteur électrique 30 est porté par le châssis 11 comme cela est illustré. Le châssis 11 comprend un logement 31 (cf. figure 6) dans lequel le moteur est agencé de manière amovible. Plus précisément illustré sur la figure 6, le châssis 11 comprend une paroi de support 32 qui s'étend depuis la deuxième surface 20 de la plateforme 12 suivant l'axe longitudinal X. La paroi de support 32 comprend une surface interne 32a qui est définie dans un plan qui est perpendiculaire au deuxième axe transversal T. Des saillies 33 s'étendent depuis la surface interne 32a de la paroi de support 32 et délimitent au moins en partie le logement 31 apte à recevoir le moteur électrique 30. Ces saillies 33 présentent une section (suivant un plan XY (formé de l'axe longitudinal X et du premier axe transversal Y) circulaire et forment ensemble une paroi cylindrique d'axe parallèle au deuxième axe transversal T. Dans le présent exemple, il y a trois saillies 33. De manière alternative, une seule paroi cylindrique s'étend depuis la surface interne 33a de la paroi de support 32.

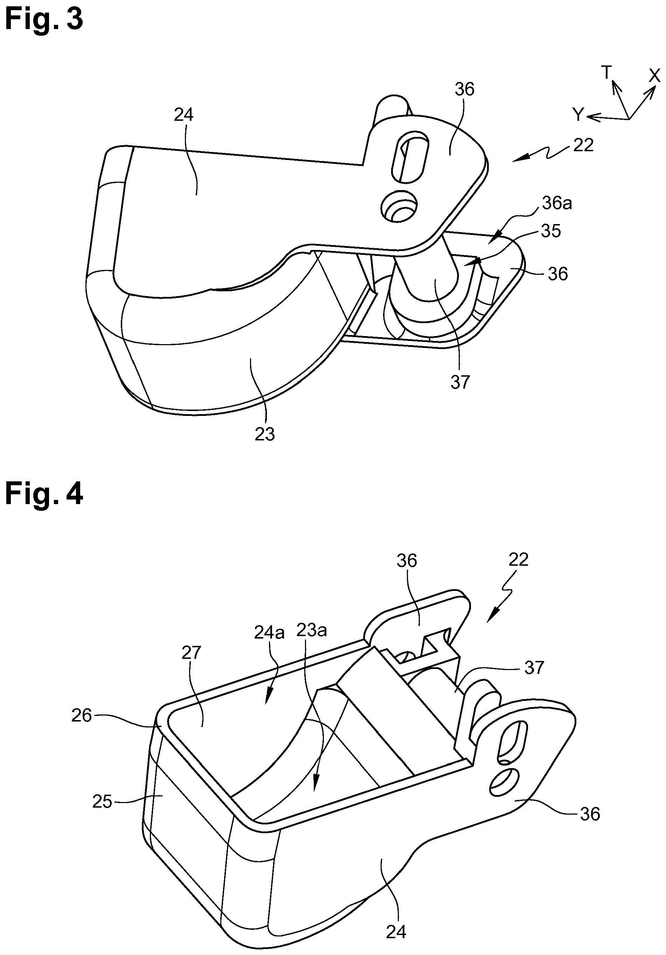

En référence aux figures 3, 4 et 6, le moteur électrique 30 comprend un arbre de sortie 34 ayant un axe de déplacement A qui est parallèle au deuxième axe transversal T. L'organe de réception 22 est solidaire en déplacement de l'arbre de sortie 34 du moteur. A cet effet et comme représenté sur les figures 3 et 4, l'organe de réception 22 comprend des moyens de liaison 35 à l'arbre de sortie 34 du moteur 30. Dans le présent exemple, l'organe de réception 22 comprend deux ailes latérales 36 qui prolongent vers l'aval les cloisons latérales 24. Les ailes latérales 36 s'étendent sensiblement suivant le premier axe transversal Y. Chaque aile latérale 36 comprend une surface interne 36a qui est définie dans un plan perpendiculaire au deuxième axe transversal T. Les surfaces internes 36a des deux ailes latérales 36 sont en regard l'une de l'autre. Les moyens de liaison 35 comprennent un tube 37 creux qui s'étend entre les deux ailes latérales 36 de l'organe de réception 22. Un arbre d'entraînement 38 est couplé à l'arbre de sortie 34 du moteur 30 et est solidaire en déplacement de l'arbre de sortie 34. L'arbre d'entraînement 38 est coaxial avec l'axe de déplacement A. L'arbre d'entraînement 38 est solidarisé à l'organe de réception 22 de sorte que celui-ci se déplace simultanément avec l'arbre 38. En particulier, l'arbre d'entraînement 38 est agencé à l'intérieur du tube 37 creux. L'arbre d'entrainement 38 présente un diamètre sensiblement égal au diamètre interne du tube 37 creux. Suivant une alternative non représentée, les moyens de liaison 35 comprennent des oreilles reliées à la paroi de réception 23 et chaque oreille comprend des trous traversant suivant le deuxième axe transversal T. L'arbre d'entraînement 38 traverse les oreilles et est solidaire de celles-ci de manière à pouvoir entraîner le déplacement de l'organe de réception.

Le moteur électrique 30 est un moteur pas à pas rotatif ou un moteur pas à pas linéaire. L'utilisation d'un moteur pas-à-pas est très économique. Dans le présent exemple le moteur 30 est un moteur pas à pas rotatif. L'arbre de sortie 34 effectue une rotation autour de l'axe de déplacement A. De même, l'organe de réception 22 pivote autour de cet axe de déplacement A. Un moteur pas à pas permet une rotation maîtrisée et précise de l'arbre de sortie et est simple à piloter. Le moteur pas à pas comprend au moins un rotor et un stator. Le rotor est couplé à l'arbre de sortie 34. Le stator porte au moins deux bobines électriques ou électroaimants qui produisent un champ magnétique. Le champ magnétique est engendré par un courant qui apparaît lors de l'alimentation du moteur par une tension prédéterminée. La direction d'un champ magnétique circulant dans les bobines des stators entraînent la rotation du rotor. L'arbre de sortie 34 du moteur électrique 30 tourne d'un angle constant en réponse à chaque impulsion électrique permettant que celui-ci adopte différentes positions angulaires qui sont dénommées pas. Le moteur 30 peut avoir un nombre déterminé de pas. L'angle peut être compris entre 0,9° et 45°. L'arbre de sortie 34 du moteur peut réaliser entre 8 et 400 pas par tour selon les moteurs.

Le moteur électrique 30 pas à pas peut comprendre un moteur pas à pas à aimants permanents, un moteur pas à pas à reluctance variable ou un moteur pas à pas hybride. De préférence, le moteur électrique 30 est un moteur pas à pas hybride ou à aimants permanents avec une reluctance constante. Le moteur pas à pas hybride comprend des aimants permanents et permet d'augmenter le couple réluctant en comparaison d'un moteur pas à pas sans aimants permanents. Le moteur hybride présente un meilleur rendement et a un besoin en courant moins important pour obtenir le même couple.

Le moteur 30 est relié à l'unité électronique de commande 18 destinée à piloter ce dernier. L'unité électronique de commande 18 permet d'alimenter également le moteur 30. L'unité électronique de commande 18 comprend pour cela un module d'alimentation destiné à alimenter le moteur électrique en tension et un module de pilotage de la rotation de l'arbre de sortie 34 du moteur électrique. L'unité électronique de commande 18 est reliée à une source d'énergie électrique tel que le réseau domestique par exemple par des câbles électriques de l'appareil 1 (non représentés).

La figure 7 illustre l'organe de réception 22 dans la position de réception. Dans cette position, l'organe de réception 22 est configuré pour contenir ou retenir une masse déterminée du produit alimentaire. L'organe de réception 22 est bien entendu vide. Dans cette position, la surface de réception (surface interne 23a) de l'organe de réception 22 est sensiblement en regard de l'ouverture 17 par laquelle le produit alimentaire est destiné à tomber par gravité dans l'organe de réception 22. Dans cet exemple, le bord libre est défini dans un plan perpendiculaire à l'axe longitudinal et ce plan est parallèle à un plan P1 passant par l'axe de déplacement A de l'arbre se sortie 34. Plus précisément encore, le centre de gravité CGV de l'organe de réception 22 vide est définie dans le plan P1 passant par l'axe de déplacement de l'arbre de sortie 34. Nous considérons que le plan P1 est horizontal et perpendiculaire à l'axe longitudinal X dans la situation d'installation du système de pesée 10 dans l'appareil 1. Le centre de gravité CGV de l'organe de réception 22 est déterminé par le barycentre des éléments qui le constituent. Ici le barycentre de l'organe de réception 22 est égal au centre de gravité CGV.

La figure 8 illustre l'organe de réception 22 dans la position de déversement. Dans la position de déversement, l'organe de réception 22 est configuré pour laisser tomber cette masse déterminée. Dans la position de déversement, la surface de réception (surface interne 23a) est à distance de l'ouverture 17. La paroi de réception 23 est en regard et ici sensiblement en contact avec la deuxième surface 20 de la plateforme 12. Nous voyons sur cette figure que l'organe de réception 22 a pivoté, selon l'axe de déplacement A, d'un angle de déversement sensiblement de 180° par rapport au plan P1 horizontal passant par l'axe de déplacement. L'angle de déversement est compris entre 0° et 180°. De manière avantageusement l'angle de déversement est compris entre 60° et 135°.

Dans un mode de réalisation, le système de pesée 10 comprends un dispositif vibrant (non représenté) destiné à permettre le déversement total du produit alimentaire (ou nettoyage) de l'organe de réception 22 dans la position de déversement. Ce dispositif vibrant est particulièrement avantageux lorsque l'angle de pivotement est inférieur à 170° par rapport au plan P1 horizontal. Le dispositif vibrant est relié électriquement à l'unité électronique de commande 18 qui le pilote lorsque celle-ci est informée de la position de déversement.

Suivant un autre mode de réalisation représenté de manière schématique sur la figure 9, l'organe de réception 22 comprend la paroi de réception 23' qui est solidaire en déplacement de l'arbre de sortie 34 du moteur électrique 30. La paroi de réception 23' est destinée à fermer ou obturer un réceptacle 47 qui est également solidaire en déplacement de l'arbre de sortie 34 du moteur 30. La paroi de réception 23' porte la surface de réception 23a qui est destinée à recevoir le produit alimentaire tombant par gravité du réservoir de stockage 3 et pour la pesée de la masse du produit alimentaire comme décrit ci-après. Le réceptacle 47 reçoit le produit alimentaire après déplacement de la paroi de réception 23' dans la position de déversement une fois que la quantité de produit alimentaire a été pesée. Plus précisément, la paroi de réception 23' est solidaire en rotation d'arbre de sortie 34 du moteur 30. La paroi de réception 23' peut être liée directement à l'arbre de sortie 34 via des moyens de liaison 35 (oreilles, tubes creux) ou peut être liée à l'arbre d'entraînement 38 (via les moyens de liaison 35) qui est couplé à l'arbre de sortie 34. Le réceptacle 47 présente une ouverture 47a qui est délimitée par des parois 47b et un fond 47c depuis lequel s'élèvent les parois 47b. La paroi de réception 23' est agencée au niveau de l'ouverture 47a pour fermer le réceptacle 47. La paroi de réception 23' présente également des dimensions sensiblement égales à celles de l'ouverture 47 tout en permettant son basculement à l'intérieur du réceptacle 47 lorsque la masse de produit alimentaire est atteinte. Le réceptacle 47 est disposé au-dessus de la chambre de mélange 7 suivant l'axe longitudinal X. Le centre de gravité CGV de l'organe de réception 22 est défini dans le plan P1 horizontal passant par l'axe de déplacement A de l'arbre de sortie 34. Le centre de gravité CGV de l'organe de réception correspond au barycentre de la paroi de réception 23'. Dans cet exemple, la surface de réception 23a est plane. Toutefois, la surface de réception 23a pourrait présenter une forme concave pour mieux retenir le produite alimentaire. Une telle configuration permet de mesurer de plus grande quantité de produit alimentaire.

L'organe de réception 22 est réalisé dans un matériau polymère ou un matériau composite avec une matrice polymère. Un exemple de matériau est un Polycarbonate (PC) ou Acrylonitrile Butadiène Styrène (ABS) ou un mélange de ceux-ci. Ces matériaux polymères ont pour avantage d'être très légers tout en étant robustes. Le matériau peut encore être un Polypropylène (PP), un Polyoxyméthylène (POM), un Polyamide (PA), etc.

De manière générale, un moteur électrique 30 pas à pas est soumis à un couple résistant (ou couple réluctant) et un couple synchrone. Le couple réluctant résulte de la résistance au passage d'un flux magnétique dans les stator et rotor. Le moteur électrique 30 est alimenté avec une tension prédéterminée pour maintenir chaque position angulaire. Cette tension prédéterminée est fonction du couple résistant appliqué sur l'arbre de sortie 34 du moteur électrique 30.

Le système de pesée 10 est configuré pour déterminer la masse du produit alimentaire en faisant décrocher le moteur c'est-à-dire de déclencher le changement de pas ou le pivotement angulaire alors que couple résistant est appliqué sur l'arbre de sortie 34 par l'unité électronique de commande 18. Pour cela, le système de pesée 10 est configuré de manière à ce que, dans ladite position de réception, l'organe de réception 22 et le produit alimentaire qu'il contient ou retient, appliquent un couple statique sur l'arbre de sortie 34, et que l'unité électronique de commande 18 est configurée de manière à appliquer un couple résistant sur l'arbre de sortie 34. De la sorte, lorsque le couple statique est au moins égal au couple résistant, le moteur électrique 30 (l'arbre de sortie 34) change de position. En particulier, le couple résistant correspond à une masse prédéterminée du produit alimentaire. Cette masse prédéterminée est celle qui doit être déversée dans la chambre de mélange 7 pour préparer la boisson.

Nous comprenons également que le contrôle du couple synchrone du moteur électrique 30 (et de l'unité électronique) du système de pesée, permet l'adaptabilité de la pesée du produit alimentaire. En d'autres termes, il est possible de modifier la valeur masse à déterminer. En effet pour certains systèmes de pesée qui utilisent des grandeurs dimensionnelles, la masse à déterminée est fixe. Un tel système de pesée est également beaucoup plus précis qu'un système utilisant des grandeurs dimensionnelles.

La valeur de la masse prédéterminée est comprise en 3g et 100g. De préférence, la valeur est de 8g.

Suivant la figure 7, l'organe de réception 22 est configuré de manière que le produit alimentaire 39, ici la poudre de lait, après déchargement (du réservoir de stockage 3) forme un talus dans ou sur l'organe de réception 22. La masse prédéterminée de produit alimentaire 39 et l'organe de réception 22 présentent un centre de gravité CGP qui est situé à une distance d prédéterminée de l'axe de déplacement A. La distance d est quasi constante. Le centre de gravité CGP de l'ensemble est disposé en-dessous du centre de gravité (CGV) de l'organe de réception 22 et en-dessous du plan P1 horizontal suivant l'axe longitudinal X. La distance d multipliée par le poids de la masse de l'ensemble (formé par la masse de produit alimentaire et celle de l'organe de réception), ramené au centre de gravité CGP constituent un moment mécanique appliqué à l'arbre de sortie 34 du moteur 30. Le moment devient le couple statique appliqué sur l'arbre de sortie 34 du moteur 30.

Suivant un exemple de réalisation représenté sur la figure 10, l'organe de réception 22 (avec la paroi de réception 23') définit un fléau présentant un angle par rapport à un plan horizontal passant par l'axe de déplacement A du moteur 30. En d'autres termes, l'organe de réception 22 est monté sur l'arbre de sortie 34 suivant un angle d'avance α (alpha) prédéterminé. Cet angle α est compris entre 1,8° et 8°. Comme cela est illustré, un talus de poudre de lait est disposé sur la surface de réception 23a de la paroi de réception 23'. Le centre de gravité CGT du produit alimentaire en forme de talus est disposé au-dessus de la surface de réception 23a. Le point d'application de la force F exercée par le talus est défini sur la surface de réception 23a et passe par le centre de gravité CGV' de l'organe de réception 22. L'organe de réception 22 est relié à l'arbre de sortie 34 de manière que le centre de gravité de l'ensemble CGP (poudre et organe de réception 22) se trouve au-dessus du plan P1 horizontal passant par l'axe de déplacement du moteur. Le centre de gravité CGP est défini dans un plan passant par l'axe de déplacement A qui forme l'angle d'avance α avec le plan P1. De la sorte lorsque le moteur décroche, le couple statique augmente plutôt qu'il ne diminue. Le moment ( F *d*cos (α)) augmente sans pour autant augmenter la masse du produit alimentaire. Un tel agencement permet d'améliorer la sensibilité du système de pesée.

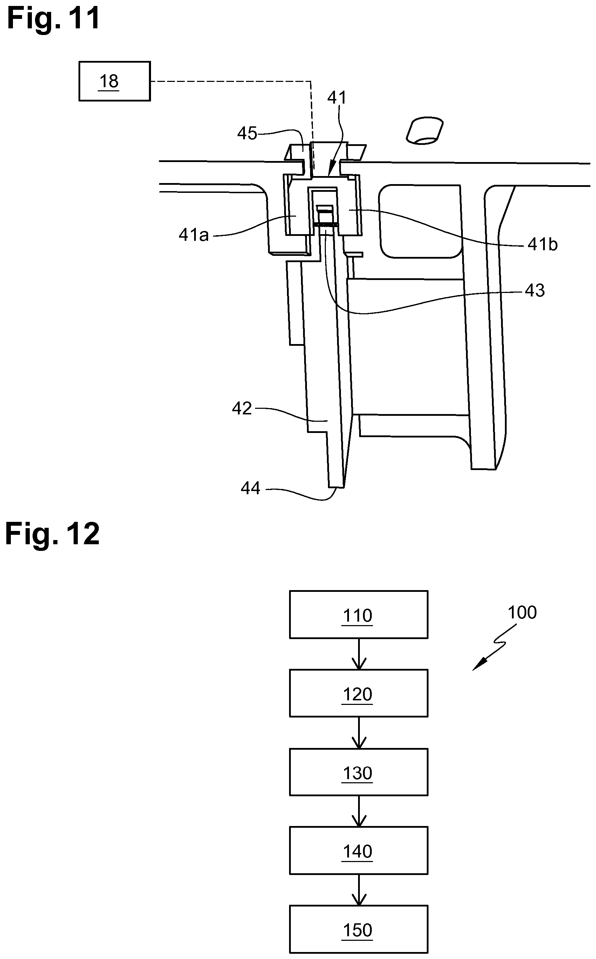

En référence aux figures 5 et 11, le système de pesée 10 comprend des moyens de détection 40 aptes à détecter au moins une position angulaire de l'arbre de sortie 34 du moteur électrique 30. Les moyens de détection 40 sont reliés à l'unité électronique de commande 18 qui est configurée pour agir sur le moteur 30 en cas de détection d'un changement de pas ou de position angulaire du moteur. Les moyens de détection 40 comprennent un émetteur d'un faisceau lumineux (visible ou non visible) et un récepteur du faisceau lumineux. Le récepteur est disposé en regard de l'émetteur. L'émetteur et le récepteur sont reliés à l'unité électronique de commande 18. Dans le présent exemple, les moyens de détection comprennent une fourche optique 41 comportant une première patte 41a sur laquelle est monté l'émetteur et une deuxième patte 41b sur laquelle est monté le récepteur. Le faisceau lumineux peut être un faisceau infrarouge. Les moyens de détection 40 comprennent un organe d'obstacle 42 qui est solidaire de l'arbre de sortie 34. Cet organe d'obstacle 42 est destiné à venir s'intercaler sur le trajet du faisceau lumineux en fonction de la position angulaire de l'arbre de sortie 34. Dans l'exemple représenté, l'organe d'obstacle 42 comprend un disque d'axe central coaxial avec l'axe de déplacement A de l'arbre de sortie 34 et solidaire en rotation de l'arbre de sortie 34. De la sorte, lorsque le moteur 30 décroche (le moteur change de pas), le disque pivote en même temps que l'arbre de sortie 34. Le disque comprend au moins une première fente 43 qui s'étend radialement depuis la périphérie 44 du disque vers l'axe central du disque. La fente 43 est destinée à être traversée par le faisceau lumineux (tel que représenté en pointillé sur la figure 11). A cet effet, la première patte 41a et la deuxième patte 41b s'étendent respectivement de part et d'autre d'une portion du disque 42 suivant l'axe transversal T. La fourche optique 41 est installée dans un logement 45 qui est formé dans la plateforme 12 du châssis 11. Le logement 45 débouche sur la première surface 13 et sur la deuxième surface 20 de la plateforme. Une portion du disque s'étend à travers le logement 45 et transversalement entre l'émetteur et le récepteur. L'organe d'obstacle 42, ici le disque, est facile à installer et n'introduit aucun couple parasite sur l'arbre de sortie 34 du moteur. De manière alternative, l'organe d'obstacle 42 comprend une came. En particulier, lorsque la fente est traversée par le faisceau lumineux, l'unité électronique de commande 18 commande le maintien de la position de l'arbre de sortie 34 du moteur par application du couple résistant. Dans ce cas, l'organe de réception 22 est alimenté par du produit alimentaire. Lorsque le faisceau lumineux est interrompu cela signifie que le faisceau lumineux balaie une surface pleine du disque et que l'arbre de sortie 34 a pivoté d'au moins un pas (première position angulaire). Dans ce cas, l'unité électronique de commande 18 pilote l'arbre de sortie 34 pour entraîner l'organe de réception 22 dans la position de déversement.

Les moyens de détection 40 sont aptes à détecter une autre position angulaire (deuxième position) de l'arbre de sortie 34 du moteur électrique 30. De manière avantageuse, le disque comprend une deuxième fente 46 visible sur la figure 6 destinée à permettre la détection de la deuxième position de l'arbre de sortie 34 et en particulier de l'organe de réception 22. La première fente 43 et la deuxième fente 46 sont disposées à 180° l'une de l'autre. Cette deuxième fente 46 fait office d'élément de détection de fin de course de l'organe de réception 22 dans la position de déversement.

Nous allons maintenant décrire un procédé 100 pour peser et déverser une masse prédéterminée d'un produit alimentaire au moyen du système de pesée 10 tel que décrit précédemment. Le procédé 100 est illustré sur la figure 12. Le procédé comprend une étape de fourniture 110 d'un produit alimentaire. Lors de cette étape, le produit alimentaire est disposé dans le réservoir de stockage 3 se trouvant au-dessus du système de pesée 10. De préférence, le produit alimentaire comprend une poudre de lait infantile. Le procédé comprend une étape de déchargement 120 d'une quantité de produit alimentaire sur ou dans la l'organe de réception 22. En particulier, le produit alimentaire est déchargé de manière à former un talus sur la surface de réception 23a de l'organe de réception 22. La surface de réception 23a est plane ou creuse comme décrit précédemment. Lors de cette étape, l'unité électronique de commande 18 envoie un ordre de commande aux moyens d'obturation pour ouvrir l'orifice de déchargement du réservoir de stockage 3. Une quantité de produit alimentaire est ainsi déchargée sur ou dans l'organe de réception 22 via l'ouverture 17 de la plateforme 12 et de la trémie 19 qui guide le produit alimentaire vers l'organe de réception 22. Le produit alimentaire 39 peut être guidé dans le volume de réception de l'organe de réception 22 dans le cas du godet. La poudre de lait est déversée de manière continue ou discontinue sur la surface de réception 23a de l'organe de réception 22.

Le procédé comprend une étape de pesée 130 d'une masse prédéterminée du produit alimentaire dans l'organe de réception 22. Cette étape 130 consiste à réaliser un décrochage du moteur. En particulier, l'étape de pesée 130 comprend une sous étape dans laquelle l'unité électronique de commande 18 applique un couple résistant sur l'arbre de sortie 34 du moteur 30. Ce couple résistant est fonction de la tension d'alimentation. A titre d'exemple, une tension de 12V qui correspond à un couple résistant 16mNm est appliquée au moteur 30. Ce couple résistant correspond à une masse de poudre de 8g environ. Lorsque l'organe de réception 22 et le produit alimentaire contenu dans l'organe de réception appliquent un couple statique qui est égal au couple résistif, l'arbre de sortie 34 pivote et change de pas. Tant que la masse de poudre de lait dans l'organe de réception 22 (ou sur la surface de réception 23a) avec la masse de l'organe de réception n'atteignent pas cette valeur prédéterminée, la poudre de lait continue de se décharger dans l'organe de réception 22.

Le procédé 100 comprend une étape de déversement 140 de la masse de poudre pesée. En particulier, dès que la masse est atteinte l'arbre de sortie 34 change de pas ou de position angulaire sans action du moteur lui-même ou commande de l'unité électronique de commande 18. Simultanément, l'organe d'obstacle 42, ici le disque coupe le faisceau lumineux entre l'émetteur et son récepteur. Les moyens de détection 40 et en particulier la fourche optique 41 envoie un signal de commande relatif à la position de l'arbre de sortie 34 à l'unité électronique de commande 18. Cette dernière envoie un ordre de commande au moteur 30 pour entraîner la rotation de l'arbre de sotie 34 et l'organe de réception 22 dans la position de déversement. Simultanément à l'étape de déversement 140 ou préalablement, le procédé comprend une étape d'arrêt de déchargement 150 du produit alimentaire dans l'organe de réception 22. Dans ce cas, l'unité électronique de commande 18 envoie un ordre de commande aux moyens d'obturation pour fermer l'orifice de déchargement du réservoir de stockage 3.

## Revendications

1. Système de pesée (10) destiné à peser et à déverser une masse prédéterminée d'un produit alimentaire, le dispositif comprenant :
- un châssis (11),
- un moteur électrique (30) pas à pas porté par le châssis (11) et ayant un arbre de sortie (34) apte à adopter différentes positions suivant un axe de déplacement (A),
- un organe de réception (22) du produit alimentaire qui est mobile suivant l'axe de déplacement (A) entre une position de réception du produit alimentaire et une position de déversement du produit alimentaire, l'organe de réception (22) étant configuré pour contenir ou retenir une masse déterminée du produit alimentaire dans la position de réception et pour laisser tomber cette masse dans la position de déversement,
- une unité électronique de commande (18) destinée à piloter le moteur électrique (30), **caractérisé en ce que** l'organe de réception (22) est solidaire en déplacement de l'arbre de sortie (34) et **en ce que** le système de pesée (10) est configuré de manière à ce que, dans ladite position de réception, l'organe de réception (22) et le produit alimentaire qu'il contient ou retient, appliquent un couple statique sur l'arbre de sortie (34), et que l'unité électronique de commande (18) est configurée de manière à appliquer un couple résistant, pour une masse prédéterminée du produit alimentaire, sur l'arbre de sortie (34) de sorte que, lorsque le couple statique est au moins égal au couple résistant, l'arbre de sortie (34) change de position.

2. Système de pesée (10) selon la revendication précédente, **caractérisé en ce que** l'unité électronique de commande (18) est configurée pour piloter le déplacement de l'arbre de sortie (34) et le déplacement de l'organe de réception (22) entre la position de réception et la position de déversement lorsque la masse de produit alimentaire atteint une valeur prédéterminée.

3. Système de pesée (10) selon l'une des revendications précédentes, **caractérisé en ce que** la masse prédéterminée du produit alimentaire contenu dans l'organe de réception (22) et l'organe de réception (22) présentent un centre de gravité (CGP) qui est situé à une distance (d) prédéterminée de l'axe de déplacement A.

4. Système de pesée (10) selon l'une des revendications précédentes, **caractérisé en ce que** l'organe de réception (22) comprend des moyens de liaison (35) solidarisés à un arbre d'entraînement (38), ledit arbre d'entraînement (38) étant couplé en rotation à l'arbre de sortie (34) du moteur électrique (30) mobile en rotation.

5. Système de pesée (10) selon l'une quelconque des revendications précédentes, **caractérisé en ce que** l'organe de réception (22) présente la forme d'un godet ou d'une paroi de réception (23').

6. Système de pesée (10) selon l'une quelconque des revendications précédentes, **caractérisé en ce que** le châssis (11) comprend une plateforme (12) pourvue d'une ouverture (17) traversant la paroi de la plateforme (12) de part et d'autre et par laquelle le produit alimentaire est destiné à tomber par gravité.

7. Système de pesée (10) selon l'une quelconque des revendications précédentes, **caractérisé en ce qu'**il comprend des moyens de détection (40) aptes à détecter au moins une position de l'arbre de sortie (34) du moteur pas à pas, les moyens de détection étant reliés à l'unité électronique de commande (18).

8. Système de pesée (10) selon la revendication précédente, **caractérisé en ce que** la masse prédéterminée est comprise entre 3 et 100g.

9. Système de pesée (10) selon l'une des revendications 3 à 8, **caractérisé en ce que** l'organe de réception (22) est monté sur l'arbre de sortie (34) de manière que le centre de gravité de l'ensemble (CGP) formé de l'organe de réception (22) et de la masse de produit alimentaire est défini dans un plan passant par l'axe de déplacement A qui forme un angle d'avance prédéterminé avec un plan (P1) horizontal passant par l'axe de déplacement A de l'arbre de sortie (34).

10. Appareil (1) pour la préparation d'une boisson à base d'un produit alimentaire **caractérisé en ce qu'**il comprend un système de pesée (10) selon l'une quelconque des revendications précédentes.

11. Appareil (1) selon la revendication précédente, **caractérisé en ce qu'**il comprend un réservoir de stockage (3) de produit alimentaire et une chambre de mélange (7) destinée à recevoir une masse prédéterminée de produit alimentaire de l'organe de réception (22) dans la position de déversement.

12. Procédé pour peser et déverser une masse prédéterminée d'un produit alimentaire au moyen d'un système de pesée (10), le système de pesée (10) comprenant au moins un moteur électrique (30) pas à pas ayant un arbre de sortie (34) et un organe de réception (22) qui est solidaire en déplacement de l'arbre de sortie (34), le procédé comprenant les étapes suivantes:
- une étape de fourniture (110) d'un produit alimentaire,
- une étape de déchargement (120) d'une quantité de produit alimentaire sur ou dans l'organe de réception (22),
- une étape de pesée (130) du produit alimentaire consistant à
- - appliquer un couple résistant pour une masse prédéterminée du produit alimentaire, sur l'arbre de sortie (34) par une unité électronique de commande (18),
-- appliquer un couple statique sur l'arbre de sortie (34) par l'organe de réception (22) et le produit alimentaire qu'il contient ou retient,
-- changer la position de l'arbre sortie (34) du moteur électrique lorsque le couple statique est au moins égal au couple résistant.

13. Procédé selon la revendication précédente, **caractérisé en ce que** le produit alimentaire comprend de la poudre de lait.

## Patentansprüche

1. Wiegesystem (10) zum Wiegen und Ausschütten einer vorbestimmten Masse eines Lebensmittelprodukts ausgelegt, wobei die Vorrichtung umfasst:
- ein Gestell (11),
- einen Elektroschrittmotor (30), der von dem Gestell (11) getragen ist und eine Abtriebswelle (34) aufweist, die geeignet ist, verschiedene Positionen entlang einer Bewegungsachse (A) einzunehmen,
- ein Aufnahmeelement (22) für das Lebensmittelprodukt, das entlang der Bewegungsachse (A) zwischen einer Aufnahmeposition und einer Ausschüttposition beweglich ist, wobei das Aufnahmeelement (22) konfiguriert ist, um eine bestimmte Masse des Lebensmittelprodukts in der Aufnahmeposition zu beinhalten oder zurückzuhalten und um diese Masse in der Ausschüttposition fallen zu lassen,
- eine elektronische Steuereinheit (18), ausgelegt zum Ansteuern des Elektromotors (30), **dadurch gekennzeichnet, dass** das Aufnahmeelement (22) mit der Abtriebswelle (34) beweglich fest verbunden ist und dass das Wiegesystem (10) dazu konfiguriert ist, dass in der besagten Aufnahmeposition das Aufnahmeelement (22) und das von ihm beinhaltete oder zurückgehaltene Lebensmittelprodukt ein statisches Drehmoment auf die Abtriebswelle (34) ausüben, und dass die elektronische Steuereinheit (18) dazu konfiguriert ist, um für eine vorbestimmte Masse des Lebensmittelprodukts ein Widerstandsdrehmoment auf die Abtriebswelle (34) auszuüben, so dass, wenn das statische Drehmoment mindestens gleich dem Widerstandsdrehmoment ist, die Abtriebswelle (34) ihre Position ändert.

2. Wiegesystem (10) nach dem vorhergehenden Anspruch, **dadurch gekennzeichnet, dass** die elektronische Steuereinheit (18) dazu konfiguriert ist, die Bewegung der Abtriebswelle (34) und die Bewegung des Aufnahmeelements (22) zwischen der Aufnahmeposition und der Ausschüttposition anzusteuern, wenn die Masse des Lebensmittelprodukts einen vorbestimmten Wert erreicht.

3. Wiegesystem (10) nach einem der vorhergehenden Ansprüche, **dadurch gekennzeichnet, dass** die vorbestimmte Masse des in dem Aufnahmeelement (22) beinhalteten Lebensmittelprodukts und das Aufnahmeelement (22) einen Schwerpunkt (CGP) aufweisen, der in einem vorbestimmten Abstand (d) von der Bewegungsachse (A) angeordnet ist.

4. Wiegesystem (10) nach einem der vorhergehenden Ansprüche, **dadurch gekennzeichnet, dass** das Aufnahmeelement (22) Verbindungsmittel (35) umfasst, die mit einer Antriebswelle (38) fest verbunden sind, wobei die besagte Antriebswelle (38) drehfest mit der Abtriebswelle (34) des drehbeweglichen Elektromotors (30) gekoppelt ist.

5. Wiegesystem (10) nach einem der vorhergehenden Ansprüche, **dadurch gekennzeichnet, dass** das Aufnahmeelement (22) die Form eines Aufnahmebehälters oder einer Aufnahmewand (23') aufweist.

6. Wiegesystem (10) nach einem der vorhergehenden Ansprüche, **dadurch gekennzeichnet, dass** das Gestell (11) eine Plattform (12) umfasst, die mit einer Öffnung (17) versehen ist, die die Wand der Plattform (12) von einer Seite zur anderen durchstößt und durch die das Lebensmittelprodukt dazu bestimmt ist, durch Schwerkraft zu fallen.

7. Wiegesystem (10) nach einem der vorhergehenden Ansprüche, **dadurch gekennzeichnet, dass** es Erfassungsmittel (40) umfasst, die geeignet sind, mindestens eine Position der Abtriebswelle (34) des Schrittmotors zu erfassen, wobei die Erfassungsmittel mit der elektronischen Steuereinheit (18) verbunden sind.

8. Wiegesystem (10) nach dem vorhergehenden Anspruch, **dadurch gekennzeichnet, dass** die vorbestimmte Masse zwischen 3 und 100 g liegt.

9. Wiegesystem (10) nach einem der Ansprüche 3 bis 8, **dadurch gekennzeichnet, dass** das Aufnahmeelement (22) derart auf der Abtriebswelle (34) montiert ist, dass der Schwerpunkt der Gesamtheit (CGP), gebildet aus dem Aufnahmeelement (22) und der Masse des Lebensmittelprodukts, in einer Ebene definiert ist, die durch die Bewegungsachse A verläuft und die mit einer durch die Bewegungsachse A der Abtriebswelle (34) verlaufenden horizontalen Ebene (P1) einen vorbestimmten Vorschubwinkel bildet.

10. Einrichtung (1) zur Zubereitung eines Getränks auf der Basis eines Lebensmittelprodukts, **dadurch gekennzeichnet, dass** sie ein Wiegesystem (10) nach einem der vorhergehenden Ansprüche umfasst.

11. Einrichtung (1) nach dem vorhergehenden Anspruch, **dadurch gekennzeichnet, dass** sie einen Lagerbehälter (3) für Lebensmittelprodukt und eine Mischkammer (7) umfasst, die dazu ausgelegt ist, eine vorbestimmte Masse an Lebensmittelprodukt von dem Aufnahmeelement (22) in der Ausschüttposition aufzunehmen.

12. Verfahren zum Wiegen und Ausschütten einer vorbestimmten Masse eines Lebensmittelprodukts mittels eines Wiegesystems (10), wobei das Wiegesystem (10) mindestens einen Elektroschrittmotor (30) mit einer Abtriebswelle (34) und ein Aufnahmeelement (22) umfasst, das mit der Abtriebswelle (34) beweglich fest verbunden ist, wobei das Verfahren die folgenden Schritte umfasst:
- einen Schritt des Bereitstellens (110) eines Lebensmittelprodukts,
- einen Schritt des Entladens (120) einer Menge an Lebensmittelprodukt auf oder in das Aufnahmeelement (22),
- einen Schritt des Wiegens (130) des Lebensmittelprodukts, der darin besteht,
-- ein Widerstandsdrehmoment für eine vorbestimmte Masse des Lebensmittelprodukts durch eine elektronische Steuereinheit (18) auf die Abtriebswelle (34) auszuüben,
-- ein statisches Drehmoment durch das Aufnahmeelement (22) und das von ihm beinhaltete oder zurückgehaltene Lebensmittelprodukt auf die Abtriebswelle (34) auszuüben,
-- die Position der Abtriebswelle (34) des Elektromotors zu ändern, wenn das statische Drehmoment mindestens gleich dem Widerstandsdrehmoment ist.

13. Verfahren nach dem vorhergehenden Anspruch, **dadurch gekennzeichnet, dass** das Lebensmittelprodukt Milchpulver umfasst.

## Claims

1. A weighing system (10) for weighing and discharging a predetermined mass of a food product, the device comprising:
- a chassis (11),
- an electric stepping motor (30) carried by the chassis (11) and having an output shaft (34) capable of adopting different positions along a displacement axis (A),
- a receiving member (22) for receiving a food product which is movable along the axis of displacement (A) between a receiving position for receiving the food product and a discharging position for discharging the food product, the receiving member (22) being configured to contain or retain a predetermined mass of the food product in the receiving position and to let this mass fall in the discharging position,
- an electronic control unit (18) for controlling the electric motor (30), **characterised in that** the receiving member (22) is secured in terms of displacement to the output shaft (34) and **in that** the weighing system (10) is configured so that, in said receiving position, the receiving member (22) and the food product it contains or retains, apply a static torque to the output shaft (34), and that the electronic control unit (18) is configured so as to apply a resistive torque, for a predetermined mass of the food product, to the output shaft (34) so that, when the static torque is at least equal to the resistive torque, the output shaft (34) changes position.

2. The weighing system (10) according to the preceding claim, **characterised in that** the electronic control unit (18) is configured to control the displacement of the output shaft (34) and the displacement of the receiving member (22) between the receiving position and the discharging position when the mass of food product reaches a predetermined value.

3. The weighing system (10) according to one of the preceding claims, **characterised in that** the predetermined mass of the food product contained in the receiving member (22) and the receiving member (22) have a centre of gravity (CGP) which is located at a predetermined distance (d) from the axis of displacement A.

4. The weighing system (10) according to one of the preceding claims, **characterised in that** the receiving member (22) comprises connecting means (35) secured to a drive shaft (38), said drive shaft (38) being coupled in rotation to the output shaft (34) of the electric motor (30) which is movable in rotation.

5. The weighing system (10) according to any one of the preceding claims, **characterised in that** the receiving member (22) is in the form of a bucket or of a receiving wall (23').

6. The weighing system (10) according to any one of the preceding claims, **characterised in that** the chassis (11) comprises a platform (12) provided with an opening (17) passing through the wall of the platform (12) on either side and through which the food product is intended to fall by gravity.

7. The weighing system (10) according to any one of the preceding claims, **characterised in that** it comprises detection means (40) capable of detecting at least one position of the output shaft (34) of the stepping motor, the detection means being connected to the electronic control unit (18).

8. The weighing system (10) according to the preceding claim, **characterised in that** the predetermined mass is between 3 and 100g.

9. The weighing system (10) according to one of claims 3 to 8, **characterised in that** the receiving member (22) is mounted on the output shaft (34) so that the centre of gravity of the assembly (CGP) formed by the receiving member (22) and the mass of food product is defined in a plane passing through the axis of displacement A which forms a predetermined angle of advance with a horizontal plane (P1) passing through the axis of displacement A of the output shaft (34).

10. An apparatus (1) for preparing a beverage based on a food product, **characterised in that** it comprises a weighing system (10) according to any one of the preceding claims.

11. The apparatus (1) according to the preceding claim, **characterised in that** it comprises a storage tank (3) for food product and a mixing chamber (7) intended to receive a predetermined mass of food product from the receiving member (22) in the discharging position.

12. A method for weighing and discharging a predetermined mass of a food product by means of a weighing system (10), the weighing system (10) comprising at least one electric stepping motor (30) having an output shaft (34) and a receiving member (22) which is secured in terms of displacement to the output shaft (34), the method comprising the following steps:
- a step (110) of providing a food product,
- a step (120) of discharging a quantity of food product onto or into the receiving member (22),
- a step (130) of weighing a food product consisting of
▪ applying a resistive torque to the output shaft (34) for a predetermined mass of food product by an electronic control unit (18),
▪ applying a static torque to the output shaft (34) by the receiving member (22) and the food product it contains or retains,
▪ changing the position of the output shaft (34) of the electric motor when the static torque is at least equal to the resistive torque.

13. The method according to the preceding claim, **characterised in that** the food product comprises milk powder.
